# EUROPÄISCHE PATENTSCHRIFT

(11) **EP 1 474 966 B1**
(45) Veröffentlichungstag und Bekanntmachung des Hinweises auf die Patenterteilung: **11.03.2009**
(21) Anmeldenummer: 04101580.1
(22) Anmeldetag: 16.04.2004
(51) Int. Cl.: A01F 15/10

(54) **Rechteckballenpresse**
Square baler
Presse à balles carrées

(30) Priorität: 06.05.2003 DE 10319985
(43) Veröffentlichungstag der Anmeldung: 10.11.2004
(73) Patentinhaber: DEERE & COMPANY, Moline, Illinois 61265-8098 (US)
(72) Erfinder: Dubois, Jean-Yves, 70100, Gresancey (FR)
(74) Vertreter: Magin, Ludwig Bernhard

(56) Entgegenhaltungen:
- EP-A- 0 341 508
- EP-A- 1 133 914
- WO-A-01/56363
- DE-A- 19 841 598
- FR-A- 2 742 305
- US-B1- 6 394 893

## Beschreibung

Die Erfindung betrifft eine Rechteckballenpresse mit einem Pressraum, einem Zufuhrkanal, einer Bindevorrichtung und einer Schneidvorrichtung stromaufwärts des Pressraums.

Aus der EP A2 11 33 914 ist eine Rechteckballenpresse mit einer Schneidvorrichtung bekannt, die außer Betrieb genommen werden kann, so dass wahlweise geschnittenes oder nicht geschnittenes Erntegut gepresst wird.

Gemäß der EP B1 341 508 wird die Schneidvorrichtung einer Großballenpresse am Ende der Bildung eines Rundballens deaktiviert, damit ein vorzeitiges Auflösen des Rundballens nach dem Verlassen der Presskammer nicht stattfindet.

Das der Erfindung zugrunde liegende Problem wird darin gesehen, dass Ballen aus geschnittenem Erntegut mit Bindegarn unter hoher Spannung schlecht zusammengehalten werden können.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise besteht der gebildete Ballen zwar im Wesentlichen aus geschnittenem Erntegut - das Bindegarn liegt aber an nicht geschnittenen Abschnitten an, so dass der Ballen unter den hohen Zugkräften des Garns nicht zerbricht.

Es gibt verschiedene Möglichkeiten, einen quaderförmigen Ballen zu bilden. Meist werden mehrere Pakete vorverdichtet und als ein Stapel in den Pressraum eingeschoben. In diesem Falle reicht es grundsätzlich aus, wenn das erste und das letzte Paket in einem Ballen aus nicht geschnittenem Gut besteht. In anderen Fällen wird Pressgut kontinuierlich in den Pressraum eingeführt, z.B. wenn eine Zuführung axial mittels einer Schnecke erfolgt. In diesem Fall steht die Dicke des nicht geschnittenen Anfangs- und Endabschnitts im Verhältnis zu der Dauer der Gutzufuhr, so dass die Schneidvorrichtung auf eine bestimmte Dauer außer Betrieb genommen wird, was einer bestimmten Dicke des Abschnitts aus nicht geschnittenem Gut entspricht.

Nachdem der Pressbetrieb aufgrund verschiedener stets überwachter Parameter der Rechteckballenpresse gesteuert bzw. geregelt wird, macht es Sinn, diese Parameter, die zudem zu einem synchronen Ablauf der Bewegungen der Press-, Binde- und Zufuhrkomponenten herangezogen werden, auch für die Steuerung oder Regelung der Schneidvorrichtung zu verwenden. Die Aktivierung bzw. Deaktivierung der Schneidvorrichtung kann danach entweder mechanisch über Gestänge oder dergleichen oder elektrisch mittels Sensoren, Schaltern oder dergleichen erfolgen. Eine Optimierung wird insbesondere bei einer Rechteckballenpresse ohne stapelweise Gutzufuhr unter Beachtung mehrerer Parameter erreicht, z. B. stellt ein Messrad den Beginn eines Ballens und der Pressdruck das nahende Ende eines Ballens fest.

Je nach dem gewollten bzw. hinnehmbaren Verhältnis zwischen geschnittenem und nicht geschnittenem Erntegut ist es auch denkbar, nicht nur an den Stirnflächen des Ballens ungeschnittenes Erntegut anzusammeln, sondern auch an dessen Ober- und dessen Unterseite. Auf diese Weise geht bei der weiteren Ballenhandhabung, z. B. beim Transport oder beim Wickeln, kein Erntegut verloren.

In der Zeichnung ist ein nachfolgend näher beschriebenes Ausführungsbeispiel der Erfindung dargestellt. Die einzige Figur der Zeichnung zeigt eine Rechteckballenpresse in schematischer Darstellung und in Seitenansicht.

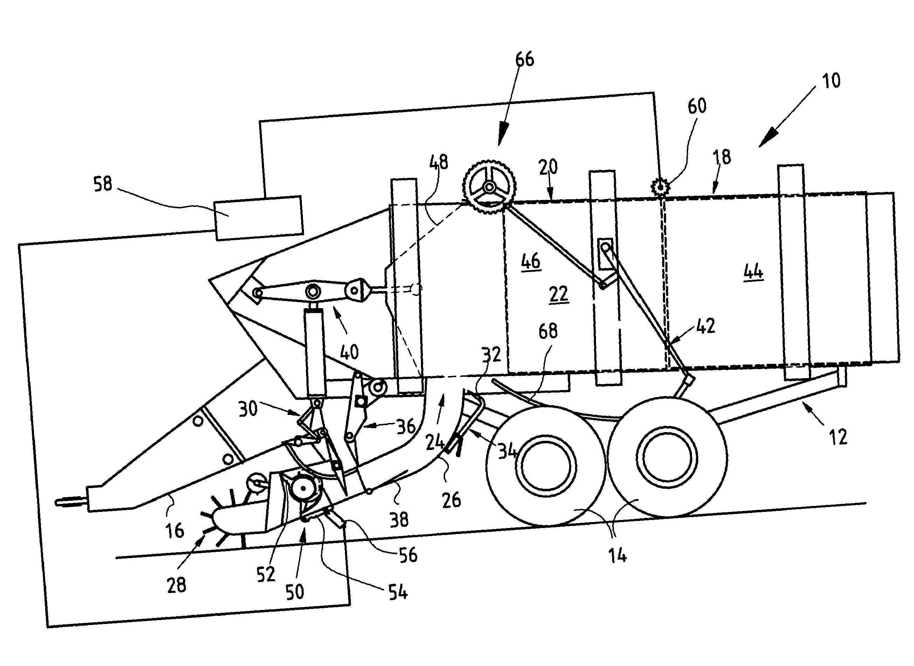

In der Zeichnung ist eine Rechteckballenpresse 10 zum Herstellen quaderförmiger Ballen gezeigt, die einen Rahmen 12 enthält, der auf Bodenstützrädern 14 in Tandemanordnung abgestützt ist. Eine Deichsel 16 ist an den Rahmen 12 angeschlossen und erstreckt sich von diesem aus nach vorne und ist so ausgebildet, dass sie an ein Zugfahrzeug, wie einen nicht gezeigten Ackerschlepper, angeschlossen werden kann, der mit einer Zapfwelle ausgerüstet ist, um Leistung zum Antreiben verschiedener angetriebener Komponenten der Rechteckballenpresse 10 zu liefern. Ein Pressraum 18 oder eine Kammer von rechteckförmigem Querschnitt wird teilweise von einem Gehäuseoberteil 20 und einem Gehäuseunterteil 22 gebildet, wobei der Gehäuseunterteil 22 mit einem Guteinlass 24 versehen ist, an den ein gekrümmter Zufuhrkanal 26 angeschlossen ist, der als ein Vorpressraum dient, wie dies nachfolgend beschrieben wird. Eine Aufnahmevorrichtung 28 in der Art einer Pick-up und mit einer zur Mitte fördernden Schnecke ist vor bzw. stromaufwärts des Zufuhrkanals 26 angeordnet, um ein Schwad von Erntegut vom Boden aufzuheben und es an eine Verdichtergabel 30 abzugeben, die dazu dient, Erntegut in dem Zufuhrkanal 26 zu verdichten, bis sich eine Ladung von vorgewählter Dichte stromaufwärts von Fingern 32 einer Rückhaltevorrichtung 34 angesammelt hat, wobei die Rückhaltevorrichtung 34 für eine Bewegung zwischen einer Rückhaltestellung, in der die Finger 32 in der Nähe des Guteinlasses 24 in den Zufuhrkanal 26 hineinragen, und einer Zufuhrstellung, in der die Finger 32 aus dem Zufuhrkanal 26 herausgezogen sind, schwenkbar montiert sind, um es der Ladung Erntegut zu ermöglichen, mittels eines Ladegabelzusammenbaus 36 über den Guteinlass 24 in den Pressraum 18 hineingestopft zu werden. An einer vorderen unteren Stelle des Zufuhrkanals 26 ist eine federbelastete Klappe 38 schwenkbar montiert, die in Abhängigkeit von dem Druck aus dem sich in dem Zufuhrkanal 26 befindlichem Erntegut schwenkt. Wenn das Erntgut eine gewünschte Dichte erreicht, wird die Bestromung eines elektrischen Steuerkreislaufs (nicht gezeigt) bewirkt, der entsprechende Antriebsverbindungen herstellt, die zuerst bewirken, dass die Rückhaltevorrichtung 34 sich so bewegt, dass sie die Finger 32 aus der sperrenden in die in Figur 1 gezeigte Stellung zurückzieht, und dann der Ladegabelzusammenbau 36 derart aktiviert, dass daraufhin seine Gabeln 30 durch den Zufuhrkanal 26 gleiten und die Ladung des Ernteguts in den Pressraum 18 bewegen können. Wenn die Ladung des Ernteguts einmal in den Pressraum 18 gestopft ist, wird ein Kolbenmechanismus 40, der vor dem Rahmen 12 angeordnet ist, in einer gesteuerten Reihenfolge nach dem Ladegabelzusammenbau 36 betätigt, um das Erntegut mittels eines Presskolbens 48 nach hinten in den Pressraum 18 zu bewegen, wo es in zu einem Ballen 46 verdichtet wird, wie dies im Stand der Technik gut bekannt ist. Nachdem der angefangene Ballen 46 eine vorgewählte Länge erreicht hat, wird eine Bindevorrichtung 42 zum Liefern von Bindegarn, die mehrere gekrümmte Nadeln 68 enthält, betätigt, um mehrere Garnstränge einer entsprechenden Anzahl nicht gezeigter Knoter zuzuführen, die so funktionieren, dass sie Garnlängen um die vorgewählte Länge des Ballens legen, um einen gebundenen Ballen 44 zu bilden, der zum Entladen fertig ist, was dann geschieht, wenn er von einem Ballenteil 46 aus dem rückwärtigen Endbereich des Pressraums 18 herausgedrückt wird, wenn er in seiner Länge zunimmt, weil neue Ladungen von Erntegut in den Pressraum 18 gestopft werden.

Nimmt man wieder Bezug auf die Einzelheiten des Kolbenmechanismus 40, dann ist zu erkennen, dass letzterer den Presskolben 48 enthält, der für eine hin- und hergehende Bewegung in dem Pressraum 18 zwischen einer zurückgezogenen Stellung vor dem Guteinlass 24 und einer ausgefahrenen Stellung über dem Guteinlass 24 angeordnet ist. Diese Bewegung des Presskolbens 48 hat zum Ergebnis, dass Ladungen von Erntegut, die aus dem Zufuhrkanal 26 in den Pressraum 18 eingeführt und gegen darin befindliches Erntegut verdichtet werden, was einen teilweise gebildeten Ballenteil 46 und/oder den kompletten Ballen 44 einschließt.

Schließlich ist zwischen der Aufnahmevorrichtung 28 und den Verdichtergabeln 30 eine Schneidvorrichtung 50 vorgesehen, wie sie an sich bekannt ist. In dem vorliegenden Ausführungsbeispiel ist die Schneidvorrichtung 50 unterschlächtig fördernd ausgeführt, was jedoch nicht zwingend ist. Diese Schneidvorrichtung 50 enthält einen Zinkenrotor 52 und Messer 54, die vorzugsweise gemeinsam mittels einer Stellvorrichtung 56 in oder außer Eingriff mit dem Zinkenrotor 52 bringbar sind.

Schließlich ist eine Steuervorrichtung 58 vorgesehen, die einerseits mit einem Messrad 60 zum Ermitteln der Länge eines im Werden befindlichen Ballens 46 und andererseits mit der Stellvorrichtung 56 verbunden ist. Es ist zwar nicht dargestellt, aber die Steuervorrichtung 58 könnte statt oder außer mit dem Messrad 60 auch mit einem Sensor zum Ermitteln der Presskraft in dem Kolbenmechanismus 40, mit einem Sensor zur Ermittlung der Stellung der Klappe 38, mit einem Sensor zum Ermitteln der Stellung des Ladegabelzusammenbaus 36 oder mit anderen Sensoren verbunden sein, die eine Auskunft über die Bildung des Ballens 46 geben könnten.

Nach alledem ergibt sich folgende Funktion.

Es wird davon ausgegangen, dass die Steuervorrichtung 58 so eingestellt ist, dass der erste und der letzte Abschnitt eines Ballens 44, 46 nicht aus geschnittenem Erntegut bestehen soll. In diesem Fall gibt das Messrad 60 bzw. ein an ihm angeordneter nicht gezeigter Sensor ein Signal an die Steuervorrichtung 58, wonach die Bildung eines neuen Ballens 46 begonnen wird. Die Steuervorrichtung 58 erstellt daraus ein Signal für die Stellvorrichtung 56, das die Messer 54 aus dem Zufuhrkanal 26 herauszieht, so dass der Zinkenrotor 52 das aufgenommene Erntegut nur weitergibt aber nicht schneidet. Sobald dieses nicht geschnittene Erntegut in den Pressraum 18 eingeführt und von dem Presskolben 48 gegen den bereits gebildeten Ballen 44 gedrückt wird, wird sich auch das Messrad 60 drehen und somit der Steuervorrichtung 58 anzeigen, dass der Endabschnitt aus ungeschnittenem Erntegut gebildet ist. Die Steuervorrichtung 58 wird daraufhin die Stellvorrichtung 56 betätigen, so dass die Messer 54 in den Zufuhrkanal 26 gelangen und alles aufgenommene Erntegut schneiden. Die Zufuhr geschnittenen Ernteguts erfolgt dann solange, bis aufgrund der Umdrehungen des Messrades 60 - oder aufgrund eines anderen Sensors - festgestellt wird, dass die Bildung des Ballens 46 in seine Abschlussphase gelangt. Sobald dies der Fall ist, gibt die Steuervorrichtung 58 wieder das Signal an die Stellvorrichtung 56, die Messer 54 aus dem Zufuhrkanal 26 zu entfernen, so dass auch der letzte Abschnitt aus nicht geschnittenem Erntegut besteht.

Alternativ zu dem dargestellten Ausführungsbeispiel kann die Schneidvorrichtung 50 auch so ausgebildet werden, dass nicht alle Messer 54 aus dem Zufuhrkanal 26 sondern nur einige entfernt werden.

## Patentansprüche

1. Rechteckballenpresse (10) mit einem Pressraum (18), einem Zufuhrkanal (26), einer Bindevorrichtung (42) und einer Schneidvorrichtung (50) stromaufwärts des Pressraums (18), **dadurch gekennzeichnet, dass** eine Steuervorrichtung zum Betreiben der Schneidvorrichtung (50) nach folgendem Verfahren vorgesehen ist:
a) am Anfang der Bildung eines Ballens (44, 46) wird die Schneidvorrichtung ganz oder teilweise deaktiviert;
b) nach der Anfangsphase wird die Schneidvorrichtung ganz oder teilweise aktiviert;
c) am Ende der Bildung eines Ballens (44, 46) wird die Schneidvorrichtung ganz oder teilweise deaktiviert;

2. Rechteckballenpresse nach Anspruch 1, **dadurch gekennzeichnet, dass** die Zeitdauer der Deaktivierung der Schneidvorrichtung (50) veränderbar ist.

3. Rechteckballenpresse nach Anspruch 1 oder 2, **dadurch gekennzeichnet, dass** die Steuerung der Aktivierung bzw. Deaktivierung der Schneidvorrichtung (50) abhängig von dem Betrieb eines Messrads (60) zur Erfassung der Ballenlänge und/oder von einem Pressdruck und/oder der Steuerung eines Ladegabelzusammenbaus (36) erfolgt.

4. Rechteckballenpresse nach einem oder mehreren der vorherigen Ansprüche, **dadurch gekennzeichnet, dass** die Schneidvorrichtung (50) auch zur Bildung oberer und/od er unterer Schichten des Ballens (44, 46) deaktivierbar ist.

## Claims

1. Square baler (10), with a baling chamber (18), a feed channel (26), a binding device (42) and a cutting device (50) upstream of the baling chamber (18), **characterized in that** a control device is provided for operating the cutting device (50) in accordance with the following process:
a) the cutting device is entirely or partially deactivated at the start of the formation of a bale (44, 46);
b) the cutting device is entirely or partially activated after the initial phase;
c) the cutting device is entirely or partially deactivated at the end of the formation of a bale (44, 46).

2. Square baler according to Claim 1, **characterized in that** the period of time of deactivation of the cutting device (50) can be changed.

3. Square baler according to Claim 1 or 2, **characterized in that** the activation or deactivation of the cutting device (50) is controlled as a function of the operation of a measuring wheel (60) for recording the bale length and/or of a baling pressure and/or of the control of a loading fork assembly (36).

4. Square baler according to one or more of the preceding claims, **characterized in that** the cutting device (50) can also be deactivated in order to form upper and/or lower layers of the bale (44, 46).

## Revendications

1. Presse à balles carrées (10) comprenant une chambre de presse (18), un canal d'amenée (26), un dispositif de liage (42) et un dispositif de coupe (50) en amont de la chambre de presse (18), **caractérisée en ce qu'**un dispositif de commande est prévu pour faire fonctionner le dispositif de coupe (50) selon le procédé suivant :
a) au début de la formation d'une balle (44, 46), le dispositif de coupe est complètement ou partiellement désactivé ;
b) après la phase initiale, le dispositif de coupe est complètement ou partiellement activé ;
c) à la fin de la formation d'une balle (44, 46), le dispositif de coupe est complètement ou partiellement désactivé.

2. Presse à balles carrées selon la revendication 1, **caractérisée en ce que** la durée de la désactivation du dispositif de coupe (50) peut être modifiée.

3. Presse à balles carrées selon la revendication 1 ou 2, **caractérisée en ce que** la commande de l'activation ou de la désactivation du dispositif de coupe (50) s'effectue en fonction du fonctionnement d'une roue de mesure (60) pour détecter la longueur de la balle, et/ou d'une pression de la presse, et/ou de la commande d'un assemblage de fourche de chargement (36).

4. Presse à balles carrées selon l'une quelconque ou plusieurs des revendications précédentes, **caractérisée en ce que** le dispositif de coupe (50) peut aussi être désactivé pour former des couches supérieures et/ou inférieures de la balle (44, 46).
